# EUROPEAN PATENT APPLICATION

(11) **EP 1 093 752 A1**
(43) Date of publication of application: **25.04.2001**
(21) Application number: 99203183.1
(22) Date of filing: 30.09.1999
(51) Int. Cl.: A47L 13/16, D04H 13/00, D04H 1/42, B32B 7/08, B32B 5/18

(54) **Mop**

(30) Priority: 01.10.1998 SE 9803331
(71) Applicant: Carpeting I Stockholm AB, 121 14 Enskededalen (SE)
(72) Inventor: Anehorn, Lars G., 195 31 Märsta (SE); Eriksson, Ulla, 850 94 Tierp (SE)
(74) Representative: Ellner, Lars O.

(57) **Abstract**

A mop for wet cleaning hard surfaces, such as floors, windows, household appliances, said mop comprising a first layer (1) which is adapted to be releasably attached to a cleaning device, preferably a mop column, and a second layer (2) of natural fibres which is adapted to absorb, hold and release liquid and thus function as a liquid store for the mop. The second layer is fixedly fastened to the first layer, for instance, by means of seams (3, 4). The layer of natural fibres (2) comprises a large portion of plant fibres having high porosity, whose cells are isolated from each other but open towards the ends of the fibre, and a small portion of high-strength fibres. Said fibres are uniformly blended in the second layer (2).

## Description

The present invention relates to a mop for wet cleaning hard surfaces, such as floors, windows, household appliances, said mop comprising a first layer which is adapted to be releasably attached to a cleaning device, preferably a mop column, and a second layer of natural fibres which is adapted to absorb, hold and release liquid and thus function as a liquid store for the mop, the second layer being fixedly fastened to the first layer, for instance, by means of seams.

The mop is primarily intended for wet cleaning methods and comprises a store for liquid, preferably water with or without cleaning chemicals, and thus it should be self-sufficient in liquid. Therefore there should be no need for any further amount of liquid. It is very important that the mop be damp as long as possible and that uniform, controlled dampness of the cleaning surface (the floor) can be maintained with as little wetness (wet spots) as possible for the floor to dry as quickly as possible after cleaning in order to minimise resoiling and the risk of slipping. Since most cleaning in public areas is made in the daytime, wet cleaning surfaces cannot be closed during the drying, and this results in the floors to a large extent being soiled once more, since the personnel have to step on the wet floors and dirt released from the shoes will stick to the floors. Moreover, the mop is suited to absorb liquid from a wet floor and receive the liquid in the store.

A mop according to the introductory part is known from GB 370,697 A1. This mop comprises a disposable piece of paper, with which a surface is cleaned. The paper is kept damp by means of a liquid store which abuts against the paper and which consists of a cushion made of cotton or a sponge. However, the cushion has the quality of releasing much liquid at the beginning of the use of the mop, after which the released amount of liquid successively decreases. The liquid store is thus drained relatively quickly and the result of the cleaning will be irregular. Furthermore, the capacity of the store is not optimal, i.e. its absorption factor could be much greater. The reason for this is that the sponge has so large cells that the capillary action is not sufficient to retain the liquid and the liquid primarily forms a film round the cotton fibres and hardly penetrates into the latter. It is difficult to remove from the cotton fibres the liquid which happens to be absorbed thereby. At the same time, the density is comparatively high.

EP 0,112,654 A2 discloses a cleaning cloth with a liquid store between a pair of sheet layers. The liquid store is made of a porous polymer. The polymeric material has a great number of pores, which are filled with a selected liquid when producing the material. The liquid is contained in the pores and released only when the cleaning cloth is exposed to a certain minimum pressure. Thus this cleaning cloth does not function as a mop but as a wet wipe.

An object of the present invention is to provide a mop having a water store which in use can damp a comparatively large cleaning surface in an even and controllable manner.

Another object of the invention is to provide a mop which can absorb a bad smell.

A further object is to provide a mop which is made of natural material and which, in its entirety, can be reused a plurality of times.

According to the invention, these objects are achieved by a mop of the type mentioned by way of introduction, which is characterised in that the layer of natural fibres comprises a large portion of plant fibres having high porosity, whose cells are isolated from each other but open towards the ends of the fibre, and a small portion of high-strength fibres, said fibres being uniformly blended in the second layer.

Further improvements of the invention appear from the features stated in the dependent claims.

A preferred embodiment of the invention will now be described for the purpose of exemplification with reference to the accompanying drawing, in which:
Fig. 1 is a plan view of a mop according to the invention;
Fig. 2 is section along the line A-A showing the build-up of the mop in Fig. 1; and
Fig. 3 is a view corresponding to the one in Fig. 2 and showing an alternative embodiment of the mop.

The mop according to the invention is primarily intended for wet cleaning of hard surfaces, such as floors, windows, household appliances and doors, and is arranged to be releasably attached to a cleaning device, for instance, a mop column or a similar device provided with a handle and a surface to which the mop can be attached. Furthermore, the design of the mop allows it to be cleaned, when needed, in a washing machine and reused a plurality of times, since it is formed as a unit made of durable materials resistant to cleaning chemicals.

To be able to attach the mop to a mop column or the like in a simple and comfortable manner, the mop has a first layer 1 for attachment. In the illustrated embodiment, this layer 1 is a Velcro strip portion, which allows the mop to be releasably attachable to the mop column by means of a co-operating Velcro strip portion or portions arranged on the column. This constitutes prior-art technique and in this connection reference is made to Swedish patent specification 504,242.

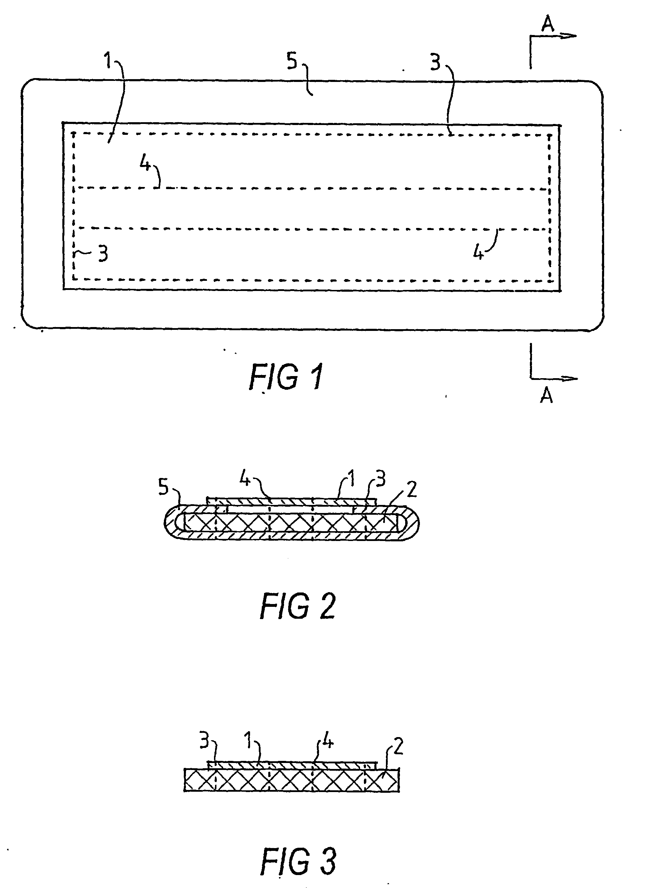

With reference particularly to Fig. 2, a second layer 2 is fixedly fastened to the first layer 1, preferably by means of through seams and, as shown, by a circumferential, continuous edge seam 3 and a pair of central seams 4. The second layer 2 is made of natural fibres, i.e. non-synthetic fibres, and its function is to absorb, hold and controllably release liquid which keeps the mop wet. In most cases, the liquid is water with or without cleaning chemicals.

To be able to achieve a good cleaning result by means of the mop, it is important to be able to provide even dampness on the floor by means of the mop, leaving as few accumulations of water as possible on the floor, in other words controlled wetting. It is important to the cleaning personnel that the liquid store hold enough liquid so that it will not have to be refilled too frequently. Thus, what is required is fibres which can take up liquid not only on the surface but also inside the fibre. In addition, the fibre must be able to retain the liquid so that it cannot leave the fibre in an uncontrolled manner.

The inventors of the present invention have tested a number of natural fibres, for instance, cotton, flax, hemp and the like, but they did not function in a satisfactory manner. However, by accident the inventors came across a consignment of prepared hare's-tail cottongrass fibres, which were found to fulfil the above requirements. Hare's-tail cottongrass is a sedge of the Eriophorum family and, besides hare's-tail cottongrass (Eriophorum vaginatum), other members of this family are close-sheated cottongrass (Eriophorum opacum), medium cottongrass (Eriophorum medium), russet cottongrass (Eriophorum russeolum), Scheuchzer's cottongrass (Eriophorum scheuchzeri), common cottongrass (Eriophorum angustifolium), broad-leaved cottongrass (Eriophorum latifolium) and slender cottongrass (Eriophorum gracile). Some of these were examined more closely to investigate which qualities render the effect which is desirable in this connection. High porosity and a density of about 1.4 g/cm³ were found to be such qualities. The absorption factor was in the order of 5 (TSL test 32-01). When examining the fibre under a microscope, it was further found that its cells or canals were isolated from each other but open towards the ends of the fibre. The cell or canal walls were very thin and each fibre contained a great number of cells or canals.

Further experiments showed that particularly good results were achieved if the average fibre length was about 3.0 cm and the fibre material was woven or felted, in particular brush felted. It was also found that the weaving and felting process was considerably facilitated if the plant fibres were blended with sheep wool; about 75% Eriophorum vaginatum and about 25% sheep wool produced an excellent result. This also enhanced the wear strength of the second layer 2. The fibres could then also be woven, and therefore said layer can also have a fabric structure. It was also found that the composition of the cells or the canals in the plant fibres allows them to absorb a bad smell. Instead of sheep wool, it is, of course, possible to use other natural fibres which promote entangling and weaving and increases the strength of the layer, for instance, from so-called hair textile plants and the like.

In spite of the fact that flax belongs to another plant family than the above-mentioned common cottongrass family, its fibres are generally prepared in the same manner, i.e. by rotting, breaking, swingling, hackling, in said order.

With reference to the drawing, especially to Fig. 2, the liquid store or the second layer 2 is contained between the first layer 1 and a third layer 5. The layers 1 and 5 are interconnected by the edge seam 3. The third layer 5, which is kept wet by the liquid store (layer 2), is of conventional design, for instance, of woven cotton yarn, flax or even chemical fibres, such as microfibres.

As already mentioned, the fibres of Eriophorum vaginatum are advantageously blended with fibres having high strength (e.g. sheep wool). Thus it is possible to omit the third layer 5 and use the second layer 2 as cleaning element, i.e. the layer 2 will rub directly against the surface which is to be cleaned, see Fig. 3. This variant is particularly suited for smooth, non-scratched surfaces, such as window panes, laminate floors and plastic floors coated with polyurethane.

When using the mop as a floor mop attached to a mop column as described, the degree of wetness of the floor is easily controlled by modifying the pressure applied to the mop handle.

The mop has been exemplified above with a filled liquid store which releases liquid in a controlled manner to a surface which is to be cleaned. Instead, it is, of course, also possible to use the mop to absorb liquid and receive it in the liquid store. Moreover, it is possible to use the second layer with or without a surrounding third layer as a so-called cleaning cloth or "sponge". Since the mop according to the invention is formed of natural material to the greatest possible extent and is also washable and reusable a plurality of times, it is also environmentally friendly.

The invention is not limited to that described above or shown in the drawings and can be modified within the scope of the appended claims.

## Claims

1. A mop for wet cleaning hard surfaces, such as floors, windows, household appliances, said mop comprising a first layer (1) which is adapted to be releasably attached to a cleaning device, preferably a mop column, and a second layer (2) of natural fibres which is adapted to absorb, hold and release liquid and thus function as a liquid store for the mop, the second layer being fixedly fastened to the first layer, for instance, by means of seams (3, 4)**, characterised** in that the layer of natural fibres (2) comprises a large portion of plant fibres having high porosity, whose cells are isolated from each other but open towards the ends of the fibre, and a small portion of high-strength fibres, said fibres being uniformly blended in the second layer (2).

2. A mop according to claim 1, **characterised** in that the second layer (2) is entangled and/or woven as well as felted.

3. A mop according to claim 1 or 2, **characterised** in that the plant fibres have a density of about 1.4 g/cm³.

4. A mop according to claims 1, 2 or 3, **characterised** in that the plant fibres have an average fibre length of about 3.0 cm.

5. A mop according to any one of claims 1-4, **characterised** in that the plant fibres have an absorption factor in the order of 5.

6. A mop according to any one of claims 1-5, **characterised** in that the plant fibres are prepared from the sedge Eriophorum.

7. A mop according to claim 6, **characterised** in that the plant fibres are prepared from Eriophorum vaginatum.

8. A mop according to claims 6 or 7, **characterised** in that the plant fibres are prepared by rotting, breaking, swingling and hackling.

9. A mop according to any one of the preceding claims, **characterised** in that the high-strength fibres are made of sheep wool.

10. A mop according to any one of the preceding claims, **characterised** in that the ratio of the portion of high-strength fibres to the portion of plant fibres is about 1:3.

11. A mop according to any one of the preceding claims, **characterised** in that the mop also comprises a third layer (5), which is woven of microfibres, cotton, flax or chemical fibre material, that the second layer (2) is contained between the first layer (1) and the third layer (5), and that the first layer (1) and the third layer (5) are interconnected by means of a continuous seam (3) along their edges.
